## Europäisches Patentamt
## European Patent Office
## Office européen des brevets

(19)

(11) Veröffentlichungsnummer: **0 057 896**
**B2**

(12) **NEUE EUROPÄISCHE PATENTSCHRIFT**

(45) Veröffentlichungstag der neuen Patentschrift:
**30.01.91**

(51) Int. Cl.⁵: **H 01 H 9/54**, B 25 C 1/06

(21) Anmeldenummer: **82100726.7**

(22) Anmeldetag: **02.02.82**

(54) **Schaltungsanordnung für den Betrieb eines elektromagnetisch angetriebenen Schlaggerätes.**

(30) Priorität: **06.02.81 DE 3104130**

(43) Veröffentlichungstag der Anmeldung:
**18.08.82 Patentblatt 82/33**

(45) Bekanntmachung des Hinweises auf die
Patenterteilung:
**18.09.85 Patenblatt 85/38**

(45) Bekanntmachung des Hinweises auf die
Entscheidung über den Einspruch:
**30.01.91 Patentblatt 91/05**

(84) Benannte Vertragsstaaten:
**FR GB IT**

(56) Entgegenhaltungen:
**CH-A- 391 053**  **FR-A-2 405 119**
**DE-A-1 613 444**  **FR-A-2 467 059**
**DE-A-2 238 440**  **GB-A-1 331 790**
**DE-A-2 258 499**  **GB-A-1 476 102**
**DE-A-2 455 433**  **US-A-3 179 866**
**DE-A-2 634 920**  **US-A-3 267 337**
**DE-A-2 933 779**  **US-A-3 736 466**
**DE-C-2 309 514**  **US-A-4 062 051**
**FR-A-1 442 962**

**General Electric SCR Manual, 5th Edition, 1977,
S. 202-203**

(73) Patentinhaber: **Kautt & Bux KG
Industriestrasse 25
D-7000 Stuttgart 80 (DE)**

(72) Erfinder: **Raisch, Dieter
Blumenmadenstrasse 9
D-7032 Sindelfingen (DE)**
Erfinder: **Häussermann, Jürgen
Ulmer Strasse 307
D-7000 Stuttgart 60 (DE)**

(74) Vertreter: **Patentanwälte Phys. Bartels Dipl.-Ing.
Fink Dr.-Ing. Held
Lange Strasse 51
D-7000 Stuttgart 1 (DE)**

EP 0 057 896 B2

## Beschreibung

Die Erfindung betrifft eine Schaltungsanordnung für den Betrieb eines an das Wechselstromnetz anzuschließenden, elektromagnetisch angetriebenen Schlaggerätes, mit einem Thyristor im Erregerstromkreis des Elektromagneten, einem Steuertransistor, der nur in seinem gesperrten Zustand eine Zündung des Thyristors ermöglicht, einem manuell betätigbaren Schalter und einer im Anschluß an ein Schließen des manuell betätigbaren Schalters den Thyristor höchstens für die Zeitspanne zwischen zwei aufeinanderfolgenden Nulldruchgängen der Netzspannung im leitenden Zustand haltenden Steuerschaltung, die derart ausgelegt ist, daß eine erneute Ansteuerung des Thyristors so lange verhindert wird, is der manuell betätigbare Schalter nach Einschaltung wieder geöffnet worden ist, worauf erst noch ein den Steuerimpuls für den Thyristor liefernder Impulskondensator über einen mit ihm in Reihe liegenden ohm'schen Ladewiderstand hinreichend aufgeladen wird. Eine derartige Schaltungsanordnung ist aus der DE—A—2 238 440 bekannt.

Da der Einschaltstrom elektromagnetisch angetriebener Schlaggeräte so groß ist, daß die Schaltleistung eines üblichen Geräteschalters nicht ausreicht, is bei dieser bekannten Schaltungsanordnung nur der Thyristor im Erregerstromkreis angeordnet. Zwischen dem Steuergitter des Thyristors und dem über den Ladewiderstand ständig an Spannung liegenden Impulskondensator liegt ein Hilfsthyristor, dessen Steuergitter Triggerimpulse zugefuhrt werden, wenn der Steuertransistor, über den das Steuergitter des Hilfsthyristors mit Masse verbunden ist, infolge einer Betätigung des manuell betätigbaren Schalters, durch die die Basis des Steuertransistors mit Masse verbunden wird, von seinem leitenden in seinen sperrenden Zustand umgeschaltet worden ist. Solange der Schalter betätigt bleibt, kann der Impulskondensator nicht wieder auf die für eine erneute Zündung des Thyristors hinreichend Spannung aufgeladen werden, wodurch sichergestellt ist, daß bei einer einmaligen Schalterbetätigung nur ein einziger Schlag ausgelöst werden kann und für die Auslösung eines zweiten Schlages der Schalter sich zumindest für die zur Aufladung des Impulskondensators erforderliche Wiederbereitschaftsverzögerungszeit in seiner unbetätigten Stellung befunden haben muß. In dieser Stellung verbindet er das Steuergitter des Thyristors mit Masse. Hierdurch kann jedoch keine so große Sicherheit gegen ein ungewolltes, geschoßartiges Ausstoßen einer Klammer oder eines Nagels aus dem Gerät infolge einer unbeabsichtigten, durch eine Netzspannungsspitze oder ein defektes Bauteil ausgelöste Zündung des Thyristors erreicht werden, wie dies der Fall ist, wenn die Schaltungsanordnung mittels eines Geräteschalters vom Netz getrennt werden kann.

Vor allem muß bei einem Schlaggerät sichergestellt sein, daß bei einer Betätigung des mechanischen Schalters nur ein einziger Schlag ausgelöst wird und die Auslösung des nächsten Schlages es erforderlich macht, zuvor den mechanischen Schalter zu öffnen.

Eine andere bekannte Schaltungsanordnung für Schlaggeräte (DE—A—2 309 514) weist eine Doppelschlagsperre auf, die auch dann nur einen einzigen Impuls an die nachgeordnete Steuerschaltung abgibt, wenn beim Schließen des manuell betätigbaren Schalters, mittels dessen Spannung an die Doppelschlagsperre anlegbar ist, dessen Kontakte prellen. Eine Phasenanschnittsteuerung erzeugt in ihrer Phasenlage veränderbare Zündimpulse für den Thyristor sowie den Rückstellimpuls für ein Flipp-Flopp, das vom Ausgangsimpuls der Doppelschlagsperre gesetzt wird und im gesetzten Zustand ein Tor für die Weiterleitung eines Impulses an die Phasenanschnittsteuerung offenhält.

Der Erfindung liegt die Aufgabe zugrunde, eine Schaltungsanordnung für den Betreib eines an das Wechselstromnetz anzuschließenden, elektromagnetisch angetriebenen Schalaggerätes zu schaffen, die alle Sicherheitsanforderungen zu erfüllen vermag, also das unbeabsichtigte Auslösen eines Schlages verhindert, und zwar mit möglichst geringem Aufwand.

Diese Aufgabe löst eine Schaltungsanordnung mit den Merkmalen des Anspruches 1.

Eine Schaltungsanordnung für den Betrieb von an das Wechselstromnetz anzuschließenden elektrischen Verbrauchern allgemein, mit einem Thyristor und einem manuell betätigbaren Schalter im Verbraucherstromkreis, der im ausgeschalteten Zustand den Stromversorgung, Verbraucher und Steuerung enthaltenden Stromkreis galvanisch auftrennt, ist aus der US—A—3 736 466 bekannt. Auch bei der bekannten Anordung schaltet der Thyristor erst durch, nach dem die Kontakte des mechanischen Schalters geschlossen sind; ferner unterbricht der Thyristor den Laststrom bevor diese Kontakte öffnen, weil die beiden im Laststromkreis bzw. im Steuerstromkreis des Thyristors liegenden Kontaktpaare des Schalters in unterschiedlichen Stellungen des Schalterbetätigungsgliedes und dadurch zeitlich versetzt schließen und wieder öffnen. Dieses Schaltverhalten weisen im wesentlichen auch die aus der FR—A—1 442 962 und der CH—A—391 053 bekannten Schaltungsanordnungen auf.

Weiterhin ist es bekannt (GB—A—1 476 102), bei einem Elektromagneten mit einem Anker, der zwischen zwei Stellungen, in welchen er sich im Abstand von dem zwei Erregerwicklungen tragenden Kern bzw. in Anlage am Kern befindet, zur Einsparung von Energie die eine Erregerwicklung nur so lange zu erregen, bis der Anker am Kern anliegt. Nach dem Schließen eines manuell betätigbaren Schalters im Erregerstromkreis beider Wicklungen wird hier ein im Stromkreis nur der einen Wicklung liegender Triac so lange gezündet, bis eine Verzögerungsschaltung beim Erreichen der vollen Erregung der anderen Wicklung eine bistabile Stufe umschaltet und dadurch eine weitere Erzeugung von Triggerimpulsen für den Triac unterdrückt. Der manuell betätigbare Schalter hat hier ohne Verzögerung den vollen Einschaltstrom der einen Erregerwicklung und, wenn seine Prellzeit größer ist als die Zeit bis zum Auftreten des ersten Triggerimpulses, auch den vollen Einschaltstrom der anderen Erregerwicklung zu schalten.

Die galvanische Trennung des Schlaggerätes vom Netz bei geöffnetem manuell betätigbarem Schalter stellt sicher, daß Netzspannungsspitzen oder defekte Bauteile nicht zu einem unbeabsichtigten Einschaltvorgang führen können. Die erfindungsgemäße Schaltungsanordnung schließt aber auch aus, daß nach dem Auslösen eines Schlages ein weiterer Schlag erfolgen kann, ehe zuvor der manuell beätigbare Schalter geöffnet worden ist, da die Steuerschaltung nicht nur beim Einschaltvorgang den Thyristor erst zündet, nachdem das Prellen des manuell betätigbaren Schalters beendet ist, sondern auch ein Signal zum setzen der Wiedereinschaltsperre erzeugt wird, die eine erneute Ansteuerung des Thyristors so lange verhindert, bis der manuell betätigbare Schalter nach einer Einschaltung wieder geöffnet worden ist. Da der manuell betätigbare Schalter stets stromlos schaltet, kann für ihn ein üblicher Geräteschalter vorgesehen werden, ohne daß trotz des unvermeidlichen Kontaktprellens die Kontakte überlastet und dadurch abbrennen würden. Dies ist nicht nur im Hinblick auf den geringen Aufwand und den geringen Raumbedarf von Vorteil. Es ist hierdurch auch möglich, einen üblichen Geräteschalter mit Einschaltsperre vorzusehen, so daß auch zuverlässig ein unbeabsichtigtes Betätigen des Schalters ausgeschlossen werden kann, was aus Sicherheitsgründen ebenfalls wichtig ist.

Um mit möglichst geringem Aufwand eine ausreichende, aber nicht unnötig groß Einschaltverzögerung zu erhalten, erzeugt der Signalgeber im Anschluß an die nach dem Schließen des manuell betätigbaren Schalters auftretende erste vollständige Halbwelle der Netzspannung mit zur Polarität der für die Erregung des Elektromagneten vorgesehenen Halbwelle entgegengesetzter Polarität ein Schaltsignal. Da während des Prellens der Kontakte am Singalgeber keine vollständige Halbwelle der Netzspannung anliegt, paßt sich die Einschaltverzögerung selbsttätig an die eventuell im Laufe der zeit länger werdende Prellzeit an. Der Aufwand für einen solchen Signalgeber ist minimal. Es werden nur zwei Dioden, ein Widerstand und ein Kondensator benötigt.

Ein Vorteil der erfindungsgemäßen Schaltungsanordnung besteht auch darin, daß als Steller für die Variation der Schlagkraft eine einfache Phasenanschnittsteuerung verwendet werden kann. Um den mit zunehmender Erwärmung des Gerätes auftretenden Verlust an Schlagkraft kompensieren zu können, genügt es deshalb, in den Stromkreis der Phasenanschnittsteuerung einen Kompensationswiderstand zu legen. Dieser Kompensationswiderstand kann auf der die übrigen Bauelemente tragenden Platine angeordnet sein, sofern durch eine entsprechende räumliche Anordnung eine ausreichende Wärmekopplung mit dem Elektromagneten vorhanden ist. Der Aufwand ist dann wesentlich geringer als bei einem in die Erregerspule des Elektromagneten eingelegten NTC-Widerstand.

Der Signaleingang der Wiedereinschaltsperre ist vorzugsweise an einen Abgriff zwischen der Erregerspule und dem Thyristor angeschlossen, weil hierbei der Einschaltvorgang selbst das Signal bildet, das die Wiedereinschaltung verhindert. Die Verwendung des Steuertransistors als Steuerschalter in dem der Ansteuerung des Thyristors dienenden Teil der Steuerschaltung ermöglicht es dabei, den Steuerausgang der Wiedereinschaltsperre an den Eingang des Steuerschalters anzuschließen, was ebenfalls dazu beiträgt, den Aufwand sehr gering zu halten. Die die Wiedereinschaltsperre bildende Kippstufe kann zwei Transistoren enthalten, die je eine Störunterdrückungsbeschaltung aufweisen, welche aus einem ohm'schen Widerstand und einem Kondensator besteht.

Bei einer bevorzugten Ausführungsform liegt parallel zur Erregerspule des Elektromagneten eine Diode, die für den bei leitendem Thyristor fließenden Strom in Sperrichtung geschaltet ist. Eine derartige Diode vermeidet Spannungsspitzen, die zu einer Beschädigung von Bauteilen führen könnten, und erlaubt es außerdem, den Stromfluß durch die Erregerspule hindurch über das Ende der Halbwelle, in der der Thyristor leitend war, hinaus für eine gewisse Zeit noch aufrechtzuerhalten. Hierdurch kann die gespeicherte magnetische Energie zu einem Nachdrücken des Schlaggliedes benutzt werden.

Im folgenden ist die Erfindung anhand eines in der Zeichnung dargestellten Ausführungsbeispiels im einzelnen erläutert. Es zeigen:

Figur 1 ein Blockschaltbild des Ausführungsbeispiels,

Figure 2 ein Schaltbild des Ausführungsbeispiels.

Ein an ein Wechselstromnetz anzuschließendes, elektromagnetisch angetriebenes Schlaggerät für Nägel, Klammern und dergleichen enthält in dem Griff seines nicht dargestellten Gehäuses einen handelsüblichen, mit einem Finger betätigbaren Geräteschalter 1, bei dem es sich im Ausführungsbeispiel um eine zweipoligen Schalter mit selbsttätiger Rückstellung handelt. Dieser Schalter kann mit einer Einschaltsperre versehen sein, die ein Schließen des Schalters erst nach Betätigung der Einschaltsperre ermöglicht, um ein unbeabsichtigtes Einschalten zu verhindern. Da derartige Geräteschalter mit Einschaltsperre ebenfalls bekannt sind, ist der Aufbau hier nicht erläutert. Der Geräteschalter 1 ist einerseits mit einem nicht dargestellten Anschlußkabel, andererseits mit zwei Anschlußpunkten 2 und 3 an einer Platine eines als Ganzes mit 4 bezeichneten Elektronikmoduls verbunden. An zwei weitere Anschlußpunkte 5 und 6 dieser Platine ist die Erregerspule 7 eines als Antrieb des Schlaggerätes dienenden Elektromagneton angeschlossen.

3

Der Anschlußpunkt 2 ist mit dem Anschlußpunkt 5 direkt, der Anschlußpunkt 3 mit dem Anschlußpunkt 6 über einen Thyristor 8 verbunden, der so in den Arbeitsstrompfad gelegt ist, daß dann wenn der Thyristor leitend ist, der Arbeits- oder Erregerstrom über den einen Pol des Geräteschalters 1 sowie die Anschlußpunkte 2 und 5 zur Spule 7 und durch diese sowie anschließend durch den Thyristor 8 hindurch zum Anschlußpunkt 6 und zum zweiten Pol des Geräteschalters 1 fließt.

Parallel zur Spule 7, also zwischen den Anschlußpunkten 5 und 6 liegt eine Diode 9, die für den durch die Netzspannung bewirkten Erregerstrom in Sperrichtung liegt. Jedoch kann nach dem Sperren des Thyristors 8 am Ende einer Halbwelle die in der Spule 7 gespeicherte magnetische Energie einen Stromfluß über die Diode 9 bewirken. Da dieser Strom durch die Spule 7 hindurch in derselben Richtung fließt wie der von der Netzspannung bewirkte Erregerstrom; erreicht man mit der Diode 9 ein Nachdrücken des nicht dargestellten, vom Elektromagneten angetriebenen Schlaggliedes. Außerdem trägt die Diode 9 dazu bei, Spannungsspitzen beim Übergang des Thyristors 8 in den sperrenden Zustand zu unterdrücken.

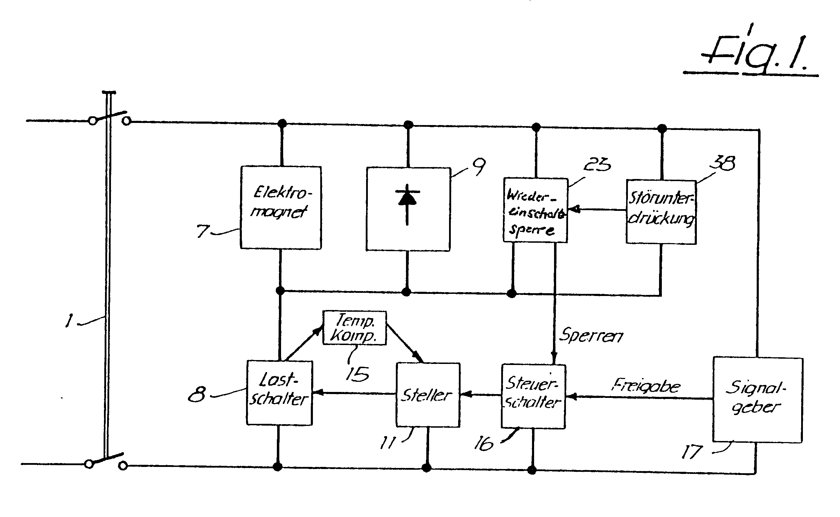

Angesteuert wird der Thyristor 8 über eine Triggerdiode 10, die andererseits an den Abgriff eines als Ganzes mit 11 bezeichneten Stellers angeschlossen ist. Dieser Steller 11 bildet, wie Fig. 1 zeigt, eine Phasenanschnittssteuerung. Er besteht deshalb aus der Reihenschaltung einer Diode 12, einem als Ladewiderstand dienenden Einstellpotentiometer 13 und einem Impulskondensator 14. Die Diode 12 ist so geschaltet, daß sie ebenso wie der Steuertransistor 16 nur einen Stromfluß während der positiven Halbwelle des Netzes erlaubt.

Zur Temperaturkompensation der Schlagkraft ist auf der Platine ein temperaturabhängiger Widerstand 15 so angeordnet, daß seine Temperatur und damit sein Widerstand von der Temperatur der Spule 7 abhängig ist, wozu eine Wärmekopplung genügt. Dieser temperaturabhängige Widerstand 15 liegt in Reihe mit dem Einstellpotentiometer 13 und dem Kondensator 14.

Der Steller 11 wird mittels des einen elektronischen Steuerschalter bildenden Steuertransistors 16 wirksam und unwirksam gemacht. Zu diesem Zwecke ist die Emitter-Kollektor-Strecke des Steuertransistors 16 parallel zum Impulskondensator 14 geschaltet. Ist der Steuertransistor 16 leitend, dann kann der Impulskondensator 14 nicht aufgeladen werden. Da an der Steuerelektrode des Thyristors 8 über die Triggerdiode 10 die Kondensatorspannung anliegt, bleibt deshalb der Thyristor 8 gesperrt, solange der Steuertransistor 16 leitend ist. Die Zündung des Thyristors 8 setzt also voraus, daß der Steuertransistor 16 gesperrt ist und der kondensator 14 sich deshalb auf die Triggerspannung der Diode 10 aufladen kann.

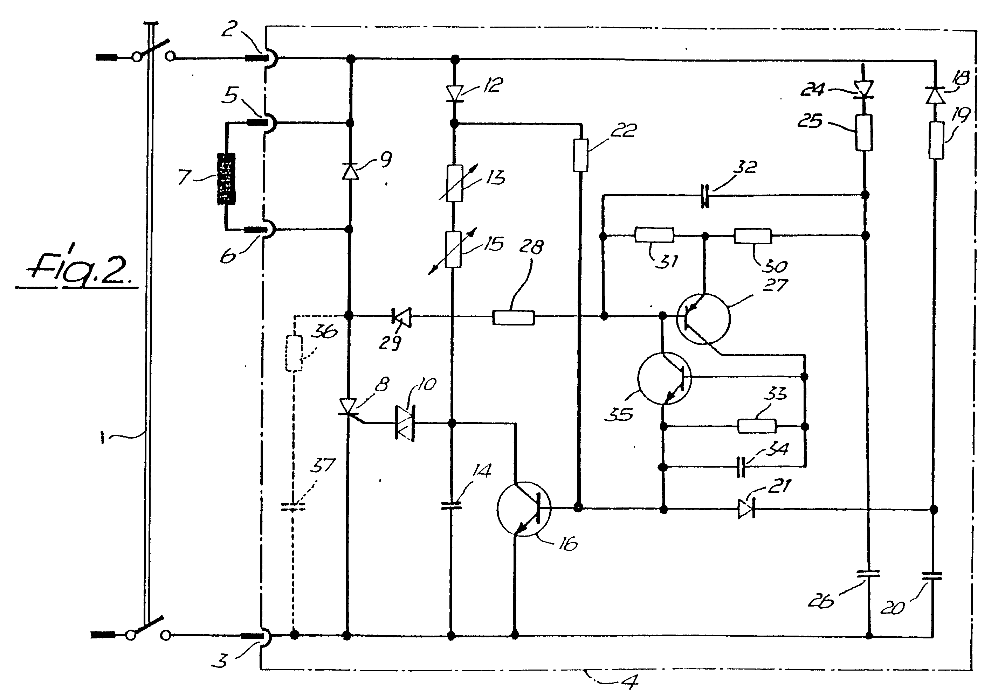

Wie der Steller 11 ist auch ein als Ganzes mit 17 bezeichneter Signalgeber an die Anschlußpunkte 2 und 3 der Platine angeschlossen, so daß an ihm bei geschlossenem Geräteschalter 1 die Netzspannung anliegt. Der Signalgeber 17 besteht aus einer Halbwellenerkennungsschaltung und einem Nulldurchgangsdetektor für die Netzspannung und hat die Aufgabe, am Ende der ersten vollständigen negativen Halbwelle, die nach dem Schließen des Geräteschalters 1 aufgetreten ist, ein Signal zur Verfügung zu stellen, welches den Steuertransistor 16 sperrt. Das Schaltsignal für den Thyristor 8 tritt also am Ende der folgenden Halbwelle auf, wenn der Geräteschalter 1 während einer positiven Halbwelle geschlossen wird. Erfolgt das Schließen während einer negative Halbwelle, dann liegt die Verzögerungszeit zwischen der Dauer von zwei bzw. drei Halbwellen, weil ebenfalls erst am Ende der folgenden negativen Halbwelle der Steuertransistor 16 gesperrt wird. Wie Fig. 2 zeigt, besteht der Signalgeber 17 aus der Reihenschaltung einer Diode 18, eines ohm'schen Signalwiderstandes 19 und eines Signalkondensators 20 sowie einer Diode 21 in der Verbindungsleitung zwischen dem durch die Basis des transistors 16 gebildeten Steuereingang des elektronischen Steuerschalters und dem Abgriff zwischen dem Signalwiderstand 19 und dem Signalkondensator 20. Die Diode 18 liegt für die positive Halbwelle der Netzspannung in Sperrichtung, gestattet also eine Aufladung des Signalkondensators 20 nur während der negativen Halbwelle. Die Diode 21 ist so geschaltet, daß über sie ein negatives Signal an den Steuertransistor 16 abgegeben werden kann.

Erfolgt das Schließen des Geräteschalters 1 während einer positiven Halbwelle der Netzspannung, dann sperrt die Diode 18 bis zum Ende dieser Halbwelle. Die Aufladung des Signalkondensators 20 beginnt also erst mit der folgenden, negativen Halbwelle.

Die Basis des npn-Steuertransistors 16, dessen Emitter mit dem Anschlußpunkt 3 verbunden ist, ist über einen Widerstand 22 und die Diode 12 des Stellers 11 mit dem Anschlußpunkt 2 verbunden. Wird der Geräteschalter 1 während einer positiven Halbwelle der Netzspannung geschlossen, dann geht der Steuertransistor 16 sofort in den leitenden Zustand über und verhindert damit bis zum Ende dieser positiven Halbwelle ein Zünden des Thyristors 8. Während der folgenden, negativenhalbwelle oder dann, wenn der Geräteschalter 1 während einer negativen Halbwelle geschlossen wird, kann der Thyristor 8 wegen der an ihm anliegenden negativen Spannung nicht gezündet werden. Der Thyristor 8 bleibt deshalb solange gesperrt, bis der Steuertransistor 16 vom Signalgeber 17 ein Schalt- oder Freigabesignal erhält. Die Erzeugung eines solchen Freigabesignals setzt aber voraus, daß die Netzspannung während einer vollständigen, negativen Halbwelle am Signalgeber 17 angelegen hat. Durch eine entsprechende Dimensionierung der Elemente des Signalgebers 17 sowie des Widerstandes 22 ist nämlich eine sich über die gesamte Dauer einer negativen Halbwelle erstreckende Aufladung des Signalkondensators 20 Voraussetzung.

Erst dann wird der zu Beginn der folgenden, positiven Halbwelle über den Widerstand 22 und über die Diode 21 fließende Umladestrom so groß, daß am Steuertransistor 16 eine ihn sperrende, negative Basisspannung entsteht. Da nach einer vollständigen negativen Halbwelle der Steuertransistor 16 zu Beginn der folgenden, positiven Halbwelle gesperrt wird, kann nun der Impulskondensator 14 des Stellers 11 aufgeladen werden, was die Voraussetzung für die Triggerung des Thyristors 8 ist. Damit der Thyristor 8 nach der durch ein Signal des Signalgebers 17 ausgelösten Zündung und der Sperrung in der folgenden, negativen Halbwelle nicht an der auf letztere folgenden, positiven Halbwelle der Netzspannung erneut gezündet wird, ist eine als Gauzes mit 23 bezeichnete und als bistabile Kippstufe ausgebildete Wiedereinschaltsperre vorgesehen, deren Stromsversorgung aus einer an die Anschlußpunkte 2 und 3 angeschlossenen Reihenschaltung, gebildet aus einer Diode 24, einem Widerstand 25 und einem Kondensator 26, besteht. 23 hat die Aufgabe, diejenige Halbwelle, während deren der Thyristor 8 leitend ist, zu erfassen und die Information solange gespeichert zu halten, bis der Geräteschalter 1 wieder geöffnet wird, um zu verhindern, daß durch die Betätigung des Geräteschalters 1 mehr als ein Schlag ausgelöst werden kann.

Wie Fig. 2 zeigt, weist die Kippstufe einen pnp-Transistor 27 auf, dessen Basis den Eingang der Kippstufe bildet und über einen Widerstand 28 sowei eine Diode 29 mit einem Abgriff zwischen dem Thyristor 8 und der Spule 7 verbunden ist. Die Diode 29 ist so gepolt, daß über sie das negative Signal, das beim Zünden des Thyristors 8 durch die damit verbundene Potentialverschiebung des Abgriffs auftritt, zur Basis des Transistors 27 gelangt. Der Emitter des Transistors 27 ist über einen Widerstand 30 mit einem Abgriff zwischen dem Widerstand 25 und dem Kondensator 26 der Stromversorgung verbunden. Parallel zur Basis-Emitter-Strecke des Transistors 27 liegt ein Widerstand 31 und parallel zu der Reihenschaltung aus den Widerständen 30 und 31 ein Kondensator 32. Der Kollektor des Transistors 27 ist über eine aus einem Widerstand 33 und einem Kondensator 34 bestehende Parallelschaltung mit der Basis des Steuertransistors 16 verbunden. Parallel zur Basis-Kollektor-Strecke des Transistors 27 liegt die Basis-Kollektor-Strecke eines npn-Transistors 35, dessen Emitter mit der Basis des Steuertransistors 16 verbunden ist.

Die beiden Transistoren 27 und 35 sind zunächst gesperrt, auch wenn die Netzspannung bereits an der Stromversorgung anliegt. Erst durch das negative Signal beim Zünden des Thyristors 8 werden beide Transistoren leitend, was dazu führt, daß der Steuertransistor 16 in den leitenden Zustand umgeschaltet wird. Da die Transistoren 27 und 35 leitend bleiben, solange die Netzspannung nicht abgeschaltet wird, bewirkt die Wiedereinschaltsperre 23, daß der Thyristor 8 nicht mehr gezündet werden kann, bis der Geräteschalter 1 geöffnet und erneut geschlossen wird. Die 23 hat also ein einer Thyristoranordnung ähnliches Verhalten. Durch die beiden RC-Glieder, welche aus dem Widerstand 31 und dem Kondensator 32 bzw. dem Widerstand 33 und dem Kondensator 34 bestehen, ist Wiedereinschaltsperre 23 äußerst unempfindlich gegen Störungen. Diese beiden RC-Glieder bilden also eine als Ganzes mit 38 bezeichnete Störunterdrückung.

Als Schutzbeschaltung für den Thyristor 8 kann ein aus einem Widerstand 36 und einem Kondensator 37 bestehendes RC-Glied vorgesehen werden, um dazu beizutragen, eventuell auftretende Spannungsspitzen, die zu Überkopfzündungen oder zur Zerstörung eines Thyristors führen können, zuverlässig zu verhindern. Die Spule 7 trägt ebenfalls zum Schutze des Thyristors 8 bei, da ihre Induktivität zusätzlich als Dämpfung gegen Spannungsspitzen aus dem Netz, wie sie beim Zuschalten der Netzspannung auftreten können, wirkt.

Wie sich aus den vorstehenden Ausführungen ergibt, schaltet der Geräteschalter 1 nahezu stromlos, da der Arbeitsstrom erst nach dem Abklingen von Prellbewegungen der Kontaktstücke des Geräteschalters mittels des Thyristors 8 eingeschaltet und auch durch den Thyristor 8 wieder abgeschaltet wird.

**Patentansprüche**

1. Schaltungsanordnung für den Betrieb eines an das Wechselstromnetz anzuschließenden, elektromagnetisch angetriebenen Schlaggerätes, mit einem Thyristor (8) im Erregerstromkreis des Elektromagneten (7), einem Steuertransistor (16), der nur in seinem gesperrten Zustand eine Zündung des Thyristors (8) ermöglicht, einem manuell betätigbaren Schalter (1) und einer im Anschluß an ein Schließen des manuell betätigbaren Schalters (1) den Thyristor (8) höchstens für die Zeitspanne zwischen zwei aufeinanderfolgenden Nulldurchgängen der Netzspannung im leitenden Zustand haltenden Steuerschaltung, die derart ausgelegt ist, daß eine erneute Ansteuerung des Thyristors (8) so lange verhindert wird, bis der manuell betätigbare Schalter (1) nach Einschaltung wieder geöffnet worden ist, worauf erst noch ein den Steuerimpuls für den Thyristor (8) liefernder Impulskondensator (14) über einen mit ihm in Reihe liegenden ohm'schen Ladewiderstand (13) wieder hinreichend aufgeladen wird, dadurch gekennzeichnet, daß der manuell betätigbare Schalter (1) im Erregerstromkreis des Elektromagneten (7) liegt und im ausgeschalteten Zustand das Schlaggerät einschließlich seiner Steuerung galvanisch vom Netz trennt, daß dem im leitenden Zustand den Impulskondensator (14) Kurzschließenden Steuertransistor (16) das ihn sperrende Signal von einem Signalgeber (17) zugeführt wird, der eine Reihenschaltung aus einem Signalkondensator (20), einem ohm'schen Signalwiderstand (19) und einer für die Halbwellen der Erregung des Elektromagneten in Sperrichtung liegende Diode (18) aufweist sowie einen Signalabgriff zwischen dem Signalwiderstand (19) und dem Signalkondensator (20), in dem eine weitere Diode (21) liegt, wobei dieses Signal im Anschluß an die nach dem Schließen des manuell betätigbaren Schalters (1) auftretende erste vollständige Halbwelle der Netzspannung mit zur Polarität der für die Erregung des Elektromagneten vorgesehen Halbwelle entgegengesetzter Polarität auftritt, d.h., eine Zündung des Thyristors ist immer erst nach Ablauf der Entprellzeit dieses Schalters möglich, und daß die bei Durchsteuerung des Thyristors (8) auftretende Potential verschiebung au dessen Anode zum Setzen einer eine Wiedereinschaltsperre (23) bildenden, bistabilen Kippstufe (27, 35) herangezogen wird, die daraufhin bis zur nächsten Öffnung des manuell betätigbaren Schalters (1) den Steuertransistor (16) durchlässig steuert.

2. Schaltungsanordnung nach Anspruch 1, dadurch gekennzeichnet, daß der manuell betätigbare Schalter ein Geräteschalter (1) ist.

3. Schaltungsanordnung nach Anspruch 2, dadurch gekennzeichnet, daß der Geräteschalter (1) mit einer Einschaltsperre versehen ist.

4. Schaltungsanordnung nach einem der Ansprüche 1 bis 3, dadurch gekennzeichnet, daß in Reihe zu dem ohm'schen Ladewiderstand (13) ein temperaturabhängier Widerstand (15) zur Temperaturkompensation der Schaltungsanordnung liegt.

5. Schaltungsanordnung nach einem der Ansprüche 1 bis 4, dadurch gekennzeichnet, daß der Eingang der Wiedereinschaltsperre (23) für das Setzsignal an einen Abgriff zwischen der Erregerspule (7) des Elektromagneten und dem Thyristor (8) angeschlossen ist.

6. Schaltungsanordnung nach Anspruch 4 oder 5, dadurch gekennzeichnet, daß die Wiedereinschaltsperre (23) zwei Transistoren (27, 35) enthält, die je eine Störunterdrückungsbeschaltung aufweisen, welche aus einem ohm'schen Widerstand (31, 33) und einem Kondensator (32, 34) besteht.

7. Schaltungsanordnung nach einem der Ansprüche 1 bis 6, gekennzeichnet durch eine parallel zur Erregerspule (7) des Elektromagneten liegende Diode (9).

**Revendications**

1. Montage servant à faire fonctionner un marteau devant être raccordé au réseau à courant alternatif et actionné par voie électromagnétique, comportant un thyristor (8) dans le circuit d'excitation de l'électro-aimant (7), un transistor de commande (16) qui ne permet un amorçage du transistor (8) que dans son état bloqué, un interrupteur (1) pouvant être actionné manuellement et un circuit de commande qui maintient le thyristor (8) à l'état conducteur à la suite d'une fermeture de l'interrupteur actionnable manuellement (1) au maximum pendant l'intervalle de temps existant entre deux annulations successives de la tension de réseau et qui est réalisé de telle manière qu'une nouvelle commande du thyristor (8) est empêchée jusqu'à ce que l'interrupteur actionnable manuellement (1) ait été à nouveau ouvert après avoir été branché, à la suite de quoi seulement un condensateur à impulsions (14) qui fournit l'impulsion de commande pour le thyristor (8) est à nouveau chargé de façon satisfaisante à l'aide d'une résistance de charge ohmique (13) montée en série avec lui, caractérisé en ce que l'interrupteur actionnable manuellement (1) est situé dans le circuit d'excitation de l'électro-aimant (7) et, à l'état débranché, sépare galvaniquement du réseau le marteau ainsi que son circuit de commande; en ce que le signal qui bloque le transistor de commande (16) qui, dans son état conducteur, met en court-circuit le condensateur à impulsions (14) lui est amené par un émetteur de signaux (17) qui comporte un montage en série formé d'un condensateur de signaux (20), d'une résistance ohmique de signal (19) et d'une diode (18) montée dans la direction de blocage des alternances de l'excitation de l'électro-aimant, ainsi qu'une prise de signal entre la résistance de signal (19) et le condensateur de signal (20) dans laquelle est montée une autre diode (21), ce signal apparaissant à la suite de la première alternance complète de la tension de réseau qui apparaît après la fermeture de l'interrupteur actionnable manuellement (1) avec une polarité opposée à la polarité de l'alternance prévue pour l'excitation de l'électro-aimant, c'est-à-dire un amorçage du transistor n'étant toujours possible qu'après que se soit écoulée la durée de suppression des battements de cet interrupteur, et en ce que l'inversion de potentiel apparaissant à l'anode du thyristor (8), lors de la pleine utilisation de celui-ci, est utilisée pour établir un étage de bascule bistable (27, 35) qui constitue un blocage (23) à un nouveau branchement, ou rétablissement, et qui commande ensuite à l'état passant le transistor de commande (16) jusqu'à une nouvelle ouverture de l'interrupteur actionnable manuellement.

2. Montage selon la revendication 1, caractérisé en ce que l'interrupteur pouvant être actionné manuellement est un interrupteur d'appareil (1).

3. Montage selon la revendication 2, caractérisé en ce que l'interrupteur d'appareil (1) comporte un dispositif de blocage à l'état branché.

4. Montage selon l'une des revendications 1 à 3, caractérisé en ce qu'une résistance (15) variable en fonction de la température est disposée en série avec la résistance ohmique de charge (13) en vue d'une compensation de température du montage.

5. Montage selon l'une des revendications 1 à 4, caractérisé en ce que l'entrée du dispositif (23) de blocage (23) s'opposant à un rétablissement du signal de positionnement est raccordée à une prise située entre la bobine d'excitation (7) de l'électro-aimant et le thyristor (8).

6. Montage selon la revendication 4 ou 5, caractérisé en ce que le dispositif (23) de blocage s'opposant à un rétablissement contient deux transistors (27, 35) qui comportent chacun un circuit d'élimination des parasites, qui se compose d'une résistance ohmique (31, 33) et d'un condensateur (32, 34).

7. Montage selon l'une des revendications 1 à 6, caractérisé par une diode (9) montée en parallèle à la bobine d'excitation (7) de l'électro-aimant.

**Claims**

1. Circuit arrangement for operation of an electromagnetically driven percussion appliance adapted for connection to an alternating current mains supply, and having a thyristor (8) in the energiser circuit of the electromagnet (7), a control transistor (16), which only enables the thyristor (8) to be triggered in its closed state, a manually operable switch (1) and a control circuit which, subsequent upon closure of the manually operable switch (1), maintains the thyristor (8) in a conductive condition for no longer than the time lapse between two consecutive passages of the mains voltages through zero, and which is arranged in such a way that renewed operation of the thyristor (8) is prevented until such time as the manually operable switch (1) has been opened again after switch-on, following which a pulse capacitor (14), which delivers the control pulse for the thyristor (8), is firstly adequately recharged by means of an ohmic load resistor (13) that is arranged in series therewith, characterised in that the manually operable switch (1) is disposed in the exciter circuit of the electromagnet (7) and, in the switched-off condition, isolates the percussion appliance, including its control system, galvanically from the mains; in that there is delivered to the control transistor (16), which short-circuits in the conductive condition of the pulse capacitor (14), the signal, which locks the latter and is supplied by a signal transmitter (17), which comprises a series circuit consisting of a signal capacitor (20), an ohmic signal resistor (19) and a diode (18) located in the blocking direction for the half-waves for energising the electromagnet, as well as a signal tapping between the signal resistor (19) and the signal capacitor (20) in which a further diode (21) is located wherein this signal occurs subsequent upon the first complete half-wave of the mains voltage occurring after closure of the manually operable switch (1) with a polarity opposite to the polarity provided for the excitation of the electromagnet, i.e. the thyristor can only ever be triggered upon completion of the bounce time of this switch, and in that the displacement in potential that occurs on the anode thereof during the drive of the thyristor (8) is used for setting a bistable switching stages (27, 35) which forms a reclosing block (23), and which then controls the control transistor (16) in a conductive manner until the next opening of the manually operable switch (1).

2. Circuit arrangement according to claim 1, characterised in that the manually operable switch is an appliance switch (1).

3. Circuit arrangement according to claim 2, characterised in that the appliance switch (1) is provided with a switch-on locking device.

4. Circuit arrangement according to one of the claims 1 to 3, characterised in that, in series with the ohmic load resistor (13) there is a temperature-dependent resistor (15) for compensating the temperature of the circuit arrangement.

5. Circuit arrangement according to one of the claims 1 to 4, characterised in that the input of the reclosing block (23) for the setting signal is connected to a tap between the exciter coil (7) of the electromagnet and the thyristor (8).

6. Circuit arrangement according to claim 4 or 5, characterised in that the reclosing block (23) incorporates two transistors (27, 35), each of which comprises an interference suppression circuit, which consists of an ohmic resistor (31, 33) and a capacitor (32, 34).

7. Circuit arrangement according to one of the claims 1 to 6, characterised by a diode (9) disposed parallel with the exciter coil (7) of the electromagnet.

Fig. 1.

Elektro-magnet  7

9

Wieder-einschalt-sperre  23

Störunter-drückung  38

Temp. Komp.  15

Sperren

Last-Schalter  8

Steller  11

Steuer-schalter  16

Freigabe

Signal-geber  17

1

EP 0 057 896 B2

_Fig.2._

EP 0 057 896 B2